# EUROPEAN PATENT SPECIFICATION

(11) **EP 2 708 733 B1**
(45) Date of publication and mention of the grant of the patent: **09.11.2016**
(21) Application number: 12184762.8
(22) Date of filing: 17.09.2012
(51) Int. Cl.: F16B 35/02, F03D 1/06, F16B 35/04

(54) **Guiding system for guiding a root of a rotor blade during installation and method of mounting a rotor blade on a rotor hub of a wind generator**
Führungssystem zum Führen einer Wurzel eines Rotorblattes während der Installation, und Verfahren zur Montage eines Rotorblattes auf einer Rotornabe eines Windgenerators
Système de guidage pour guider une racine d'une pale de rotor pendant l'installation et procédé de montage d'une pale de rotor sur un moyeu de rotor d'une éolienne

(43) Date of publication of application: 19.03.2014
(73) Proprietor: Areva Wind GmbH, 27572 Bremerhaven (DE)
(72) Inventor: Fach, Hans-Joachim, 28832 Bremerhaven (DE)
(74) Representative: Prinz & Partner mbB

(56) References cited:
- DE-U- 1 798 509
- FR-A3- 2 577 286
- GB-A- 2 483 678

## Description

### FIELD OF THE INVENTION

The invention relates to guiding system for guiding a root of a rotor blade during installation of the rotor blade on a rotor hub of a wind generator. Furthermore, the invention relates to a method of mounting a rotor blade on a rotor hub of a wind generator. The invention also relates to guiding devices and means for guiding a root of a rotor blade during installation of the rotor blade on a rotor hub of a wind generator.

### BACKGROUND

During installation of an offshore wind generator (also referred to as a wind power plant or a wind driven power plant), a complete rotor is assembled onshore and subsequently shipped to the offshore wind generator. Typically, the three rotor blades are mounted on a rotor hub and the complete rotor assembly is transferred to a suitable ship or barge for transport to the offshore wind generator. Upon arrival at the offshore wind generator, the rotor assembly is unloaded from the transport ship and mounted on the nacelle of the wind generator, for example using a high load crane barge.

In some aspects, the onshore assembly of the rotor is convenient and efficient because it is technically less demanding than offshore works. Installation of the rotor blades may be performed using the equipment which is available for example at a production facility. Furthermore, there is little influence of the weather conditions on the assembly works. However, a rotor assembly of an offshore wind generator is a large device having a diameter which can be up to 135 m or even more in the future. Narrow port facilities may hinder the transport from the onshore facility to the offshore wind generator. For servicing the rotor assembly, the complete rotor is removed from the nacelle of the wind generator. To conduct the works, a high load crane barge has to be available and has to be operated under offshore conditions. After removal of the rotor assembly, a further transport of this huge part is necessary.

Another option is the offshore assembly of the rotor blades. This means, the rotor hub is first mounted to the nacelle and the rotor blades are subsequently mounted on the rotor hub. The rotor blades may be handled using a special device for grabbing the rotor blade and for positioning it in virtually any angular position for installation on the rotor hub.

However, the rotor blade has to be approached to the rotor hub carefully in order to avoid any damage in particular of the rotor hub cover and the rotor blade itself. The tool for grabbing and aligning the rotor blade has to be operated very slowly, which is however a time consuming process. Furthermore, even a small error in the handling system may lead to an unstable and difficult to control situation of the rotor blade.

GB 2 483 678 A discloses an apparatus for mounting wind turbine blades on a hub comprises guide rods in the vicinity of the blade root and hub for connection to corresponding socket sections provided on respective ones of a root and a hub to facilitate connection of one to the other and may be provided on the either or both of the blade and hub. The rods and sockets engage before male and female fasteners e.g. bolts meet to allow the blade to be positioned at the hub in the correct rotational orientation to facilitate connection of the necessary fasteners. The rods may be bolted on and the sockets may be integral with their components, attached with adhesive or bolts or may be attached via a tie or cord across then main blade root fastening bolts so that the tie may be cut to re-use the socket. A blade positioning mounting arm system is also disclosed.

DE 1 798 509 U discloses a connecting element for construction purposes in particular cranes having a removable guiding tip on top of a screw. A similar connecting element is disclosed in FR 2 577 286 A3.

### SUMMARY

It is an object of the invention to provide an improved guiding system for guiding a blade root during installation of a blade on a rotor hub. Furthermore, it is an object to provide an improved method of mounting a rotor blade on a rotor hub of a wind generator.

The object is solved by the subject matter of the independent claims.

A guiding system for guiding a root of a rotor blade having a blade flange during installation of the rotor blade on a rotor hub of the wind generator is provided. The guiding system comprises at least one guiding tip which is configured to be non-permanently fixed on a free and of one of the bolts which reside in the blade flange. The bolts on the blade flange extend outwards the rotor blade. A dimension of the guiding tip, which is considered in a direction which is substantially perpendicular to a direction of a length extension of the bolt and which is considered in a status when the guiding tip is mounted on the bolt, is greater than a diameter of a screw thread of the bolt.

During installation of a rotor blade on a rotor hub, the bolts which extend from the blade flange are inserted in corresponding apertures or through holes in the hub flange. In order to allow insertion of the bolts in or through the apertures, there is a clearance between a maximum diameter of the bolts and an inner diameter of the apertures in the hub flange. Typically, a maximum diameter of the bolt is a diameter of a screw thread which is arranged at or in closed proximity to a tip or free end of a respective one of the bolts. However, during insertion of the bolts in the apertures in the hub flange, the screw thread may be damaged, even by very small misalignments of the rotor blade with respect to the rotor hub. Furthermore, there is a risk for a damage of the hub flange if the bolts and the apertures in the hub flange are not exactly aligned with respect to each other.

Advantageously, the guiding system according to aspects of the invention provides a guiding tip having a greater diameter than the screw thread of the bolts. The guiding tip will guide the bolts in the apertures in the hub flange. A risk for a collision between the screw thread and an interior wall of the through holes is minimized, even if few of the bolts are provided with a guiding tip. Advantageously, the guiding tip is non-permanently fixed on the bolts and in particular, the guiding tip may be removable from a tip of the bolt without a tool.

According to an advantageous embodiment , the guiding tip has a conical shape which widens towards the free end of the bolt. This is considered when the guiding tip is mounted on the bolt. The conical shape of the guiding tip will simplify the insertion of the bolt head into the corresponding aperture in the hub flange.

In another advantageous embodiment , the guiding tip is configured to be press-fitted in a cavity of the bolt, wherein said cavity projects substantially in a direction of a length extension of the bolt. In particular, the bolt may comprise a hexagon socket which is arranged in the cavity of the bolt. Similar, the guiding tip may comprise a hexagon head screw which is screwed in a shaft of the guiding tip and which fits with the hexagon socket of the bolt. The shaft extends from a guiding tip head of the guiding tip. Furthermore, there may be an elastic o-ring which is arranged between the hexagon screw head and a rim of the shaft of the guiding tip. Said rim of the shaft faces the hexagon screw head. The guiding tip may be configured to be mounted in the cavity of the bolt by fitting the hexagon screw head in the hexagon socket inside the cavity and by screwing the screw in the shaft so as to squeeze the elastic o-ring. Due to the compressive force which is applied to the o-ring, a diameter of the o-ring increases. As a result, a press-fit connection between an inner wall of the cavity and the squeezed o-ring may be established.

Advantageously, the press-fit connection is strong enough for non-permanently fixing the guiding tip on the bolt. However, the guiding tip may be removed from the bolt without using a tool. This will facilitate the works when mounting the rotor blade on the rotor hub.

According to another advantageous aspect of the invention, the guiding system further comprises a guiding bolt for replacement of one of the bolts in the blade flange. A guiding bolt may be configured similar to the bolts which reside in the blade flange. In particular, the guiding bolt may be a reduced shaft or anti-fatigue shaft bolt. The guiding bolt can carry the guiding tip and may further comprise a distance member which surrounds the guiding bolt in a section which is between its free end and the hub flange. This distance member enlarges a diameter of the guiding bolt in this section. In particular, the diameter of the guiding bolt is enlarged so as to fit with a diameter of its screw thread or to be greater than a diameter of the screw thread.

After insertion of the bolts in the corresponding apertures in the hub flange, the guiding tip will guide the bolts through the through holes. However, when the bolts are completely or nearly completely inserted in the through holes, their free ends carrying the guiding tip will project from an opposite aperture of the through holes. As a consequence, the guiding tip may no longer guide the bolts and there is a play between the bolts and the through holes. The guiding member surrounding the guiding bolts takes over the guidance of the bolts and minimizes this play. The bolts of the rotor blade are guided along their entire length along the through holes in the hub flange.

Furthermore, the guiding system according to the invention comprises a blade root catcher which is configured to be fixed on an outer ring of a root bearing of the rotor hub. The guiding tab protrudes outwards the rotor hub so as to engage an outer surface of the rotor blade in order to guide the blade root towards the hub flange during installation of the rotor blade to the rotor hub. Advantageously, the blade root catcher is configured to engage with the outer surface of the rotor blade prior to engagement of any further parts of the rotor blade and the rotor hub. In other words, the blade root catcher is the member which contacts the rotor blade first.

In an advantageous aspect, the guiding system further comprises a device for spacing the hub flange of the rotor hub from the blade flange of the rotor blade during installation of the rotor blade on the rotor hub. A rotor hub is typically configured to have a clearance between an inner surface of the hub flange and an inner reinforcement structure of the rotor hub. However, when the bolts of the rotor blade are fully inserted and project through the corresponding through holes in the hub flange, a second clearance between the bolt heads and the reinforcement structure of the rotor hub is typically too small for insertion of nuts on the bolt heads. Advantageously, the guiding system comprises a device for spacing the hub flange and the rotor flange so as to increase said clearance between the bolt heads and the inner reinforcement structure of the rotor hub. This is due to the fact the bolts are not fully inserted in the through holes of the hub flange. The increased second clearance allows lateral insertion of the nuts using this increased clearance and placement of the nuts on the bolt heads. Assembly of the rotor blade and in particular placement of the nuts on the bolt heads is not restricted to placement of nuts through designated hand holes in the inner reinforcement structure of the rotor hub. Assembly of the rotor blade to the rotor hub may be performed easier and faster because an arbitrary number of nuts may be mounted simultaneously.

However, the rotor blade may apply a force on the rotor hub. Consequently, the device for spacing may be pressed between the hub flange and the rotor flange. The device for spacing may be removed only when the rotor blade is slightly detached from the rotor hub. However, even small movements of the rotor blade represent a risk for a damage of either the rotor blade or the rotor hub cover. Furthermore, the rotor blade may become very susceptible to wind forces. Advantageously, the guiding system according to aspects comprises a device for spacing the rotor flange and the hub flange. This device has a distance member defining a clearance between the hub flange and the blade flange. Furthermore, the device for spacing may be configured for variable adjustment of this clearance. In other words, the distance member is configured to provide an adjustable clearance. If there is a force which is applied on the device for spacing, the clearance between the hub flange and the rotor flange may be lowered which will release the distance member from the compressive forces. Subsequently, the device for spacing may be removed easily and conveniently from the clearance between the rotor flange and the blade flange.

There is also a blade root catcher for a guiding system according to aspects of the invention. The blade root catcher can be configured to be fixed to an outer ring of a root bearing of the rotor hub and which protrudes outwards the rotor hub so as to engage with an outer surface of the rotor blade in order to guide the blade root towards the hub flange during installation of the rotor blade to the rotor hub.

There is also a device for a guiding system according to aspects of the invention. The device can be configured to space the hub flange of the rotor hub from the blade flange of the rotor blade during installation of the rotor blade on the rotor hub, wherein the device for spacing defines a clearance between the hub flange and the blade flange.

There is also a guiding tip for guiding a root of a rotor blade having a blade flange during installation of the rotor blade on a rotor hub of a wind generator. The guiding tip is advantageously configured for a guiding system according to aspects of the invention. The guiding tip can be configured to be non-permanently fixed on a free end of one of the bolts which reside in the blade flange and which extend outwards the rotor blade. A dimension of the guiding tip, which is considered in a direction which is substantially perpendicular to a direction of a length extension of the bolt and in a status when the guiding tip is mounted on the bolt, can be greater than a diameter of a screw thread of the bolt.

According to another aspect of the invention, a method of mounting a rotor blade to a rotor hub of a wind generator is provided. A guiding tip is non-permanently fixed on a free end of one of the bolts which reside in a blade flange of the rotor blade. These bolts extend outwards the rotor blade. A dimension of said guiding tip, wherein the dimension is considered in a direction which is substantially perpendicular to a direction of a length extension of the bolt and in a status when the guiding tip is mounted on the bolt head, can be greater than a diameter of a screw thread of the bolt. Furthermore, a blade root catcher is mounted on an outer ring of root bearing of the rotor hub. The blade root catcher protrudes outwards the rotor hub. The rotor blade is attached to the rotor hub, wherein an outer surface of the rotor blade engages the blade root catcher when the blade root approaches the hub flange. The blade root catcher is configured to engage an outer surface of the rotor blade prior to engagement of any further parts of the rotor blade and the rotor hub, in particular prior to engagement of the bolts which reside in the blade flange. By help of the blade root catcher, the root of the rotor blade is guided towards the hub flange and subsequently, the guiding tip engages and projects into one of the through holes in the hub flange. When the rotor flange and the hub flange approach each other, the rotor flange may contact a distance member which can be mounted on the hub flange. Subsequently, nuts are mounted on the bolts, wherein the nuts are inserted through a lateral clearance. Said lateral clearance is increased due to the device for spacing and it is located between an inner reinforcement structure of the rotor hub and the bolt heads. Furthermore, the spacer may be removed before tightening the nuts on the bolts.

Furthermore, the invention also provides a method of mounting a rotor blade to a rotor hub of a wind generator in which the pitch drive of a motor blade might be used in order to adjust a guiding tip with respect to a through hole in the hub flange. This provides that the root of the rotor blade is actively rotated with its own pitch drive in order to bring the bolts and the guiding tips in a suitable position with respect to the trough holes.

Same or similar advantages which have been already mentioned with respect to the guiding system according to aspects of the invention apply to the method according to aspects of the invention in a same or similar way and are therefore not repeated.

### BRIEF DESCRIPTION OF DRAWINGS

Further aspects and characteristics of the invention ensue from the following description of the preferred embodiments of the invention with reference to the accompanying drawings, wherein
FIG. 1 is a simplified detailed perspective view showing a part of a blade flange having a plurality of bolts extending from the blade flange, wherein two bolts are replaced by guiding bolts, according to an embodiment of the invention,
FIG. 2 is a more detailed simplified perspective view showing bolts extending from the blade flange, according to an embodiment of the invention,
FIG. 3 is a simplified side view showing a guiding tip according to an embodiment of the invention,
FIG. 4 is a simplified detailed perspective view showing a hub flange having guiding tabs mounted thereon,
FIG. 5 is a simplified perspective side view showing a guiding tab which is mounted on a hub flange furthermore, there is an outer surface of a rotor blade which is mounted on the hub flange,
FIG. 6 is a simplified top view showing a device for spacing the hub flange and the blade flange, according to an embodiment of the invention,
FIG. 7 is a simplified cross sectional view of the device for spacing according to FIG. 6.

### DETAILED DESCRIPTION OF EXAMPLE EMBODIMENTS

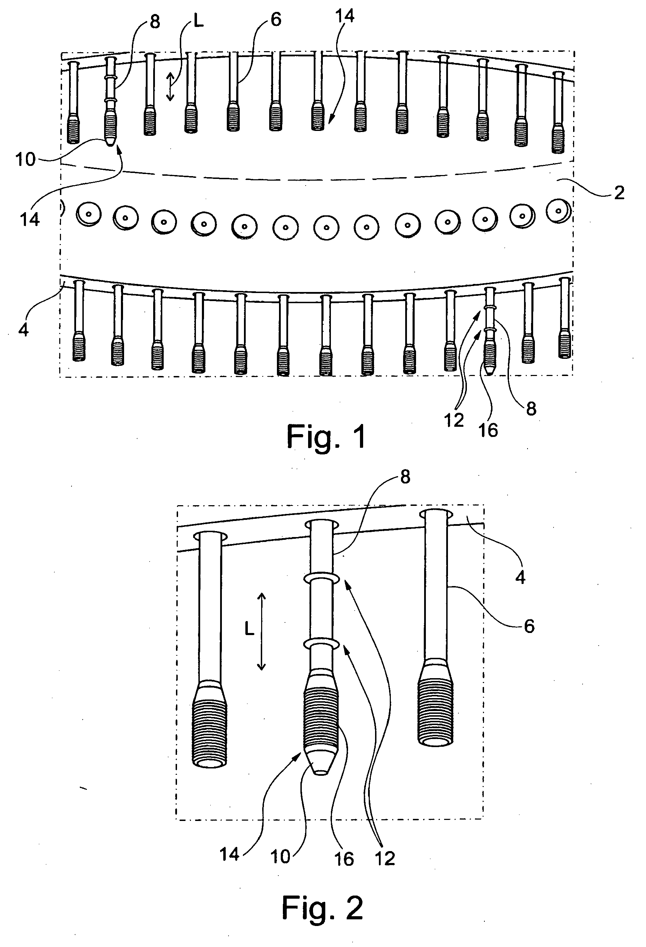

FIG. 1 is a simplified detailed perspective view showing the blade root 2 having a blade flange 4 carrying a plurality of bolts 6 which extend from the blade flange 4 and project outside the rotor blade. By way of an example only, two of the bolts 6 are replaced by guiding bolts 8. The guiding bolts 8 may be reduced shaft or anti-fatigue shaft bolts which are substantially configured similar to the other bolts 6. The guiding bolts 8 each comprise a guiding tip 10 and a distance member. In particular, two distance members 12 may be arranged on the shaft of the guiding bolt 8. The guiding tip 10 is non-permanently fixed to a free end 14 of the guiding bolts 8. Furthermore, the guiding bolts 8 have a screw thread 16 which is arranged at or in close proximity to the free end 14. A dimension of the guiding tip 10 is considered in a direction which is substantially perpendicular to a direction of a length extension L of the guiding bolts 8. This dimension, for example a diameter of the guiding tip 10, is greater than a diameter of the screw thread 16 of the guiding bolts 8. Placement of the guiding tips 10 is not limited to the guiding bolts 8. Similar, the guiding tips 10 may be placed on a free end 14 of one or more of the bolts 8.

FIG. 2, which is a further detailed simplified perspective view, shows the guiding bolt 8, which is arranged on the blade flange 4, in more detail. The distance members 12, which may be for example o-rings, are arranged on the shaft of the guiding bolt 8 so as to enlarge a diameter of the guiding bolt 8. This diameter is considered in a direction which is substantially perpendicular to a direction of a length extension L of the guiding bolt 8. The enlarged diameter of the guiding bolt 8 is arranged so as to fit with a diameter of its screw thread 16.

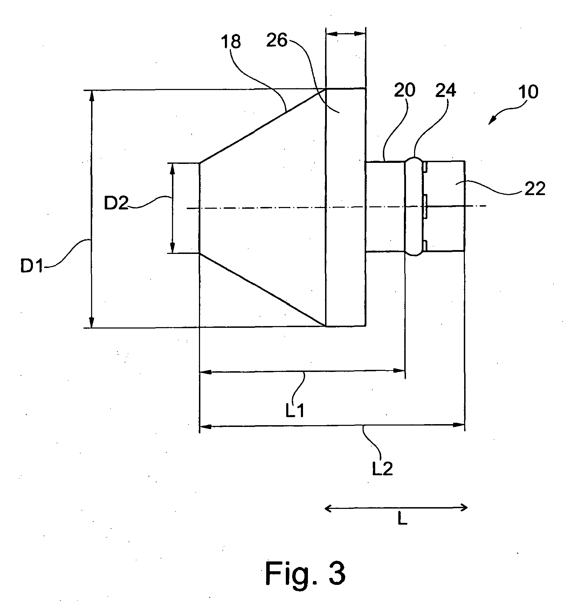

In FIG. 3, there is a simplified side view showing a guiding tip 10 according to an embodiment of the invention. The guiding tip 10 is configured to be non-permanently fixed to the free end 14 of one of the guiding bolts 8 or the further bolts 6. The guiding tip 10 has a conically shaped guiding tip head 18. When the guiding tip 10 is arranged on the guiding bolt 8, the conical shape widens towards the free end 14 of the guiding bolt 8. Furthermore, there is a shaft 20 which extends from the guiding tip head 18. A screw 22 is screwed in this shaft 20. The guiding tip head 18 and the shaft 20 may be an integral part.

The guiding bolt 8 and the further bolts 6 may comprise a cavity which substantially extends along a direction of the length extension L of the bolts 6, 8. The cavity of the bolts 6, 8 may comprise a hexagon socket which is arranged in said cavity. The screw 22 of the guiding tip 10 comprises a hexagon head which is configured to fit with the hexagon socket in the bolts 6, 8. Furthermore, there is an elastic o-ring 24 which is arranged between the hexagonal screw head and a rim of the shaft 20 which faces the screw head. The guiding tip 10 is configured to be mounted in the cavity of one of the bolts 6 or in a cavity of a guiding bolt 8 by fitting in the screw head of the screw 22 in the hexagon socket of the bolt 6, 8. By rotating the conical guiding tip head 18 with respect to the screw 22 (which is fixed in the bolt 6, 8), the elastic o-ring 24 is squeezed. As a consequence, the diameter of the elastic o-ring 24 (which is considered in a direction perpendicular to a direction of the length extension L of the guiding tip 10) will increase so as to establish a press-fit connection between an inner wall of the cavity of the bolts 6, 8 and the squeezed o-ring 24. Advantageously, this may be performed by rotating the tip head 18 without a tool, for example by hand.

By way of an example only, a first and greater diameter D1 of the conical tip head 18 is approximately 37 mm. This first diameter D1 is configured to be greater than a diameter of the screw thread 16 of the bolts 6, 8. When the bolts 6, 8 are inserted in the corresponding through holes in the hub flange, a circumferential rim 26 of the guiding tip head 18 will contact an inner surface of the through holes. Advantageously, the screw thread 16 of the bolts 6 may be prevented from contacting an inner surface of the through holes. This protects the screw threads 16 on the one hand and the inner surfaces of the through holes in the hub flange on the other hand. The circumferential rim 26 of the guiding tip head 18, by way of an example only, has a width, which is considered in a direction parallel to the direction of the length extension L of the guiding tip 10, of a approximately 6 mm. Furthermore, a smaller diameter D2 of the conical tip head 18 may be approximately 14 mm. The conical shape of the conical tip head 18 will facilitate the insertion of the guiding tip 10 into the through holes in the hub flange. The conical tip head 18 together with the shaft 20 of the guiding tip 10 may have a length L1, which is considered in a direction of the length extension L, of approximately 31 mm, for instance. A total length L2 of the guiding tip 10 may be approximately 40 mm, wherein this total length L2 is again considered in a direction which is substantially parallel to a direction of the length extension L.

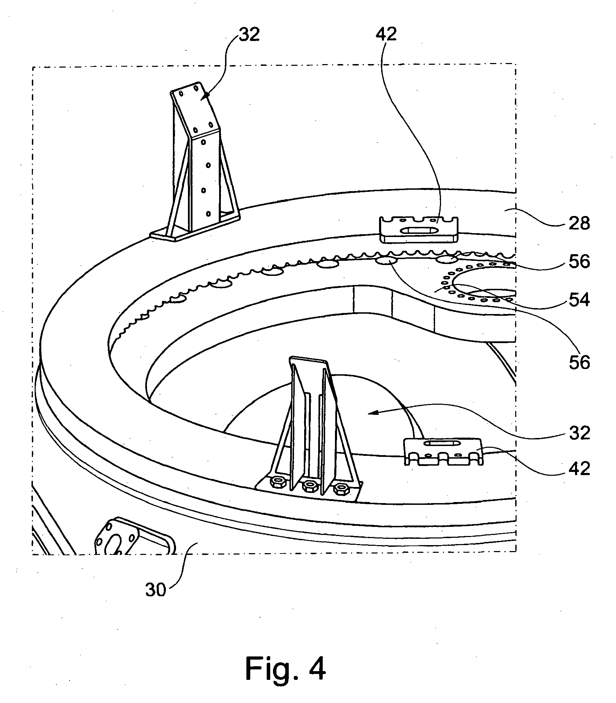

In FIG. 4, there is a simplified detailed perspective view showing a hub flange 28 of a rotor hub 30. By way of an example only, two guiding tabs 32 are fixed on an outer ring of a root bearing of the rotor hub 30. The guiding tabs 32 protrude outwards the rotor hub 30 and are configured to engage with an outer surface of the rotor blade prior to contact of any other part of the rotor blade with the rotor hub 30. Furthermore, two devices for spacing 42 may be mounted on the hub flange 28, we will refer to this device further below.

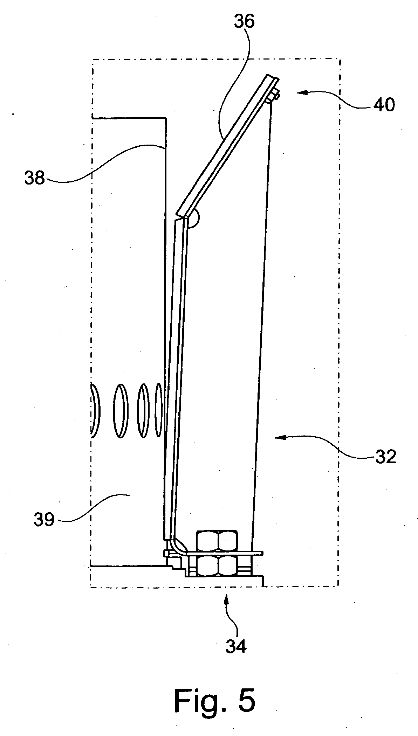

FIG. 5 is a detailed simplified perspective side view showing the guiding tab 32 which is fixed to the outer ring 34 of the root bearing of the rotor hub 30. The guiding tab 32 comprises a contact surface 36 which is arranged to decline from a surface 38 of the rotor blade 39 in a portion which is close to a free end 40 of the guiding tab 32. This declining contact surface 36 facilitates approaching the rotor blade 39 with respect to the hub flange 28. The contact surface 36 may be plated with a low friction material, for example Teflon.

When the bolts 6, 8 of the rotor blade 39 project through the corresponding through holes in the hub flange 28 of the rotor hub 30, the next step during installation of the rotor blade 39 on the rotor hub 30 is the placement of nuts on the bolt heads of the bolts 6. This may be performed using hand holes 56 in an internal supporting structure 54 of the rotor hub 30 (see FIG. 4). However, there is a limited number of hand holes 56 and accordingly, a limited number of nuts may be placed simultaneously. For placement of further nuts on the bolt heads, the rotor blade 39 has to be rotated in that the further bolts align with the corresponding hand holes 56.

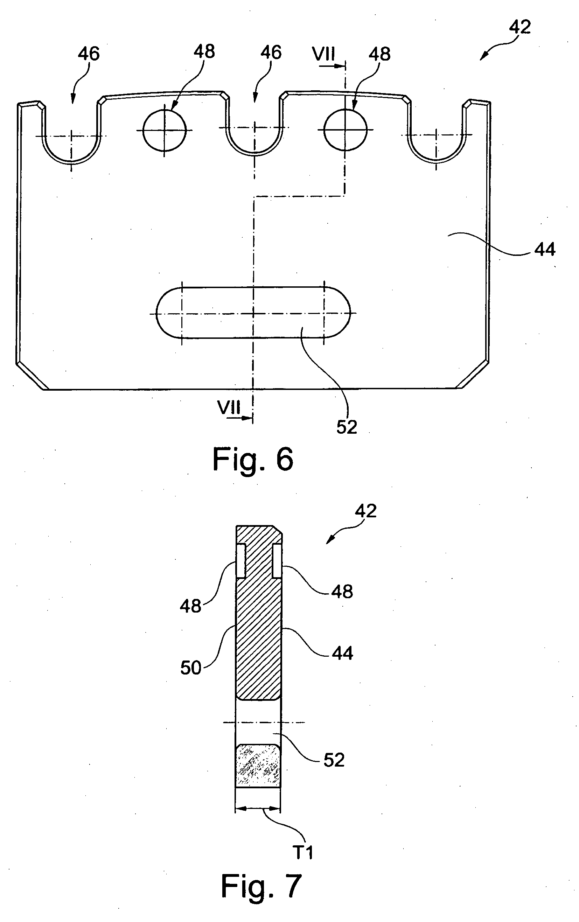

However, there is a clearance between an inner surface of the hub flange 28 and the internal supporting structure 54 of the rotor hub 30. This clearance defines a second clearance between the bolt heads and the internal supporting structure 54. However, if the bolts are fully inserted in the through holes of the hub flange 28, this second clearance is too small for insertion of the nuts on the bolt heads. When a suitable distance between the blade root and the hub flange is safeguarded, nuts may be inserted laterally because the bolts 6 are not fully inserted in the corresponding through holes of the hub flange 28. An arbitrary number of nuts may be arranged on the corresponding bolt heads simultaneously, which means in a single step. In order to provide a clearance between the rotor blade flange and the hub flange 28, there is a device for spacing 42 which is shown in the simplified top view of FIG. 6.

The device for spacing 42 may be mounted on the hub flange 28 as it is shown in the simplified perspective view of FIG. 4. The device for spacing 42 comprises a flat first surface 44 which is designated to contact the contact surface of the hub flange 28. An opposite second contact surface 50 (see FIG. 7) is designated to contact a contact surface of the blade flange. Furthermore, the device for spacing 42 comprises a plurality of cavities 46 which are arranged to accommodate the bolts 6 of the rotor blade 39 when the blade root approaches the hub flange 28. In order to fix the device for spacing 42 on the hub flange 28, there are fixing members 48, for example magnets. In particular, these fixing members 48 may be inserted in either one of the contact surfaces 44, 50, so as to provide a flat and smooth contact surface 44, 50.

This is shown in more detail in the simplified cross sectional view of FIG. 7, showing a cross section of the device 42 along line VII-VII. The fixing members 48 are inserted in the first contact surface 44 which is for contacting the hub flange 28 and in the second contact surface 50 which is for contacting a contact surface of the blade flange. To simplify a removal of the device for spacing 42, there is a through hole 52 allowing a distant end of the device for spacing 42 to serve as a handle for removal of the device 42 from the clearance between the hub flange 28 and the blade flange.

For mounting a rotor blade 39 to a rotor hub 30 of a wind generator, at least one guiding tip 10 is non-permanently fixed to a free end 14 of either a guiding bolt 8 or a bolt 6 which extends from the blade flange 4. Furthermore, a guiding tab 32 is mounted, preferably on an outer ring of the root bearing of the rotor hub 30 so as to protrude outwards the rotor hub 30. The rotor blade 39 is mounted on the rotor hub 30 by approaching the blade root to the hub flange 28. First, there is a contact between the surface 38 of rotor blade 39 and the contact surface 38 of a guiding tab 32. The rotor blade 39 is centered with respect to the hub flange 28 of the rotor hub 30 and guided towards the hub flange 28. Subsequently, the bolts 6, 8 are guided through the through holes in the hub flange 28 by help of the guiding tips 10. A collision between the screw thread 16 of the bolts 6, 8 and an inner surface of the through holes and the hub flange 28 may be prevented by help of the guiding tips 10. When the bolts 6, 8 nearly entirely project through the corresponding through holes, the bolts 6, 8 may be guided in the through holes by help of the distance members 12 of the guiding bolts 8 so as to minimize a play of the bolts 6, 8 in the through holes. If the blade flange 4 further approaches the hub flange 28, the blade flange 4 will contact a second contact surface 50 of a device for spacing 42 which is arranged on the hub flange 28. A thickness T1 of the device for spacing 42 (for example, the thickness T1 may be approximately 44 mm) defines an increased clearance between a free end 14 of the bolts 6, 8 and the internal support structure 54 of the rotor hub 30. Nuts may be placed on the bolts heads by inserting the nuts laterally using the clearance between the inner surface of the hub flange 28 and the internal support structure 54. After removal of the device for spacing 42 from the intermediate space between the blade flange 4 and the hub flange 28, the nuts may be tightened on the bolts 6 so as to mount the rotor blade 39 on the rotor hub 30 of the wind generator.

## Claims

1. A guiding system for guiding a root (2) of a rotor blade (39) having a blade flange (4) during installation of the rotor blade (39) on a rotor hub (30) of a wind generator, the guiding system comprising at least one guiding tip (10) which is configured to be non-permanently fixed on a free end (14) of one of the bolts (6, 8) which reside in the blade flange (4) and which extend outwards the rotor blade (39), wherein a dimension of the guiding tip (10), which is considered in a direction which is substantially perpendicular to a direction of a length extension of the bolt (6, 8) and in a status when the guiding tip (10) is mounted on the bolt, is greater than a diameter of a screw thread (10) of the bolt (6, 8), **characterized in that** the guiding system further comprises guiding tabs (32) being configured to be fixed to an outer ring (34) of a root bearing of the rotor hub (39) and which protrude outwards the rotor hub (30) so as to engage with an outer surface of the rotor blade (39) prior to contact of any other part of the rotor blade with the rotor hub in order to guide the blade root towards the hub flange during installation of the rotor blade (39) to the rotor hub (30).

2. The guiding system according to claim 1, wherein the guiding tip (10) has a conical shape which widens towards the free end (14) of the bolt (6, 8), when the guiding tip (10) is mounted on the bolt (6, 8).

3. The guiding system according to claim 1 or 2, wherein the guiding tip (10) is configured to be press-fitted in a cavity of the bolt (6, 8) which projects substantially in a direction of a length extension of the bolt (6, 8).

4. The guiding system according to claim 3, wherein the bolt (6, 8) comprises a hexagon socket which is arranged in the cavity and the guiding tip (10) comprises a fitting hexagon head screw which is screwed in a shaft extending from a guiding tip head, wherein an elastic o-ring (24) is arranged between a screw head and a rim of the shaft which faces the hexagon head of the screw (22), and the guiding tip (10) is configured to be mounted in the cavity of the bolt (6, 8) by fitting the hexagon screw head in the hexagon socket inside the cavity and by screwing the screw in the shaft so as to squeeze the elastic o-ring (24) and so as to establish a press-fit connection between an inner wall of the cavity and the squeezed o-ring.

5. The guiding system according to anyone of the preceding claims, further comprising a guiding bolt (8) for replacement of one of the bolts (6) in the blade flange (4), the guiding bolt (8) carrying the guiding tip (10) and comprising a distance member (12) surrounding the guiding bolt (8) in a section which is between its free end (14) and the hub flange (4), wherein the distance member (12) enlarges a diameter of the guiding bolt (8).

6. The guiding system according to anyone of the preceding claims, further comprising a device (42) for spacing the hub flange (28) of the rotor hub (30) from the blade flange (4) of the rotor blade during installation of the rotor blade on the rotor hub, wherein the device (42) for spacing defines a clearance between the hub flange (28) and the blade flange (4).

7. A method of mounting a rotor blade on a rotor hub of a wind generator, the method comprising the steps of:
a) non-permanently fixing a guiding tip (10) on a free end (14) of at least one bolt (6, 8) which resides in a blade flange (4) of the rotor blade (39) and which extend outwards the rotor blade (39), wherein a dimension of the guiding tip (10), which is considered in a direction which is substantially perpendicular to a direction of a length extension of the bolt and in a status when the guiding tip is mounted on the bolt head, is greater than a diameter of a screw thread (16) of the bolt (6, 8), the method being **characterized by**
b) mounting a guiding tab (32) on an outer ring (34) of a root bearing of the rotor hub, wherein the guiding tab (32) protrudes outwards the rotor hub,
c) mounting the rotor blade (39) on the rotor hub (30), wherein an outer surface of the rotor blade (39) engages the guiding tab (32) when the blade root is guided towards the hub flange (28) and wherein the guiding tip (10) engages and projects into a through hole in the hub flange (28), when the rotor blade (39) approaches the rotor hub (30) and
d) mounting nuts on the bolts (6, 8) which reside in the blade flange of the rotor blade.

8. The method according to claim 7, comprising the step of using the pitch drive of a motor blade in order to adjust the guiding tip (10) with respect to the through hole in the hub flange (28) when the blade root is guided towards the hub flange.

9. The method according to claim 7 or 8, further comprising the steps of
a) mounting a device (42) for spacing on the hub flange (28) of the rotor hub (30) before the nuts are placed on the bolts (6, 8),
b) removing the device (42) for spacing before tightening the nuts on the bolts (6, 8).

## Patentansprüche

1. Führungssystem zum Führen einer Wurzel (2) eines Rotorblatts (39), das einen Blattflansch (4) aufweist, während der Anbringung des Rotorblatts (39) an einer Rotornabe (30) einer Windkraftanlage, wobei das Führungssystem wenigstens eine Führungsspitze (10) umfasst, die für eine nicht dauerhafte Befestigung an einem freien Ende (14) eines der Bolzen (6, 8) ausgeführt ist, die sich in dem Blattflansch (4) befinden und sich aus dem Rotorblatt (39) heraus erstrecken, wobei eine Abmessung der Führungsspitze (10) in einer Richtung, die im Wesentlichen senkrecht zu einer Richtung einer Längenerstreckung des Bolzens (6, 8) ist, und in einem Zustand betrachtet, in dem die Führungsspitze (10) am Bolzen montiert ist, größer als ein Durchmesser eines Schraubengewindes (10) des Bolzens (6, 8) ist, **dadurch gekennzeichnet, dass** das Führungssystem ferner Führungszungen (32) umfasst, die zur Befestigung an einem Außenring (34) eines Wurzellagers der Rotornabe (39) ausgeführt sind und von der Rotornabe (30) so nach außen vorstehen, dass sie an einer Außenfläche des Rotorblatts (39) angreifen, bevor irgendein anderes Teil des Rotorblatts mit der Rotornabe in Kontakt gelangt, um während der Anbringung des Rotorblatts (39) an der Rotornabe (30) die Blattwurzel zum Nabenflansch hin zu führen.

2. Führungssystem nach Anspruch 1, bei dem die Führungsspitze (10) eine konische Form hat, die zum freien Ende (14) des Bolzens (6, 8) hin breiter wird, wenn die Führungsspitze (10) an dem Bolzen (6, 8) montiert ist.

3. Führungssystem nach Anspruch 1 oder 2, bei dem die Führungsspitze (10) so ausgeführt ist, dass sie in einen Hohlraum des Bolzens (6, 8) eingepresst ist, der im Wesentlichen in eine Richtung einer Längenerstreckung des Bolzens (6, 8) ragt.

4. Führungssystem nach Anspruch 3, bei dem der Bolzen (6, 8) einen Innensechskant aufweist, der im Hohlraum angeordnet ist, und die Führungsspitze (10) eine passende Sechskantschraube aufweist, die in einen Schaft eingeschraubt ist, der sich aus einem Führungsspitzenkopf erstreckt, wobei ein elastischer O-Ring (24) zwischen einem Schraubenkopf und einem Rand des Schafts angeordnet ist, der dem Sechskantkopf der Schraube (22) zugewandt ist, und die Führungsspitze (10) so ausgeführt ist, dass sie im Hohlraum des Bolzens (6, 8) montiert wird, indem der Sechskantschraubenkopf in den Innensechskant innerhalb des Hohlraums eingepasst wird und die Schraube so in den Schaft eingeschraubt wird, dass der elastische O-Ring (24) zusammengepresst ist und eine Pressverbindung zwischen einer Innenwand des Hohlraums und dem zusammengepressten O-Ring hergestellt ist.

5. Führungssystem nach einem der vorhergehenden Ansprüche, ferner mit einem Führungsbolzen (8) zum Ersetzen eines der Bolzen (6) im Blattflansch (4), wobei der Führungsbolzen (8) die Führungsspitze (10) trägt und ein Abstandsstück (12) umfasst, das den Führungsbolzen (8) in einem Abschnitt umgibt, der zwischen seinem freien Ende (14) und dem Nabenflansch (4) liegt, wobei das Abstandsstück (12) einen Durchmesser des Führungsbolzens (8) vergrößert.

6. Führungssystem nach einem der vorhergehenden Ansprüche, ferner mit einer Vorrichtung (42) zum Beabstanden des Nabenflansches (28) der Rotornabe (30) vom Blattflansch (4) des Rotorblatts während der Anbringung des Rotorblatts an der Rotornabe, wobei die Vorrichtung (42) zum Beabstanden einen Zwischenraum zwischen dem Nabenflansch (28) und dem Blattflansch (4) definiert.

7. Verfahren zur Montage eines Rotorblatts an einer Rotornabe einer Windkraftanlage, wobei das Verfahren die folgenden Schritte umfasst:
a) eine Führungsspitze (10) wird an einem freien Ende (14) wenigstens eines Bolzens (6, 8) nicht dauerhaft befestigt, der sich in einem Blattflansch (4) des Rotorblatts (39) befindet und sich aus dem Rotorblatt (39) heraus erstreckt, wobei eine Abmessung der Führungsspitze (10) in einer Richtung, die im Wesentlichen senkrecht zu einer Richtung einer Längenerstreckung des Bolzens ist, und in einem Zustand betrachtet, in dem die Führungsspitze am Bolzenkopf montiert ist, größer als ein Durchmesser eines Schraubengewindes (16) des Bolzens (6, 8) ist, wobei das Verfahren **dadurch gekennzeichnet ist, dass**
b) eine Führungszunge (32) an einem Außenring (34) eines Wurzellagers der Rotornabe montiert wird, wobei die Führungszunge (32) von der Rotornabe nach außen vorsteht,
c) das Rotorblatt (39) an der Rotornabe (30) montiert wird, wobei eine Außenfläche des Rotorblatts (39) an der Führungszunge (32) angreift, wenn die Blattwurzel zu dem Nabenflansch (28) hin geführt wird, und wobei die Führungsspitze (10) an einem Durchgangsloch im Nabenflansch (28) angreift und in dieses hineinragt, wenn das Rotorblatt (39) sich der Rotornabe (30) nähert, und
d) Muttern auf den Bolzen (6, 8) montiert werden, die sich im Blattflansch des Rotorblatts befinden.

8. Verfahren nach Anspruch 7, mit dem Schritt, bei dem der Neigungsantrieb eines Rotorblatts dazu verwendet wird, die Führungsspitze (10) bezüglich des Durchgangslochs im Nabenflansch (28) zu verstellen, wenn die Blattwurzel zu dem Nabenflansch hin geführt wird.

9. Verfahren nach Anspruch 7 oder 8, ferner mit den Schritten, bei denen
a) eine Vorrichtung (42) zum Beabstanden am Nabenflansch (28) der Rotornabe (30) montiert wird, bevor die Muttern auf die Bolzen (6, 8) aufgesetzt werden,
b) die Vorrichtung (42) zum Beabstanden entfernt wird, bevor die Muttern auf den Bolzen (6, 8) angezogen werden.

## Revendications

1. Système de guidage pour guider un pied (2) d'une pale de rotor (39) présentant une bride de pale (4) pendant l'installation de la pale de rotor (39) sur un moyeu de rotor (30) d'une génératrice pour éolienne, le système de guidage comprenant au moins une pointe de guidage (10) qui est réalisée de sorte à être fixée de manière non-permanente sur une extrémité libre (14) de l'un des boulons (6, 8) présents dans la bride de pale (4) et s'étendant vers l'extérieur de la pale de rotor (39), une dimension de la pointe de guidage (10) qui est considérée dans un sens sensiblement perpendiculaire à un sens d'une extension en longueur du boulon (6, 8) et dans un état dans lequel la pointe de guidage (10) est agencée sur le boulon, étant supérieure à un diamètre d'un filet de vis (10) du boulon (6, 8), **caractérisé en ce que** le système de guidage comprend en outre des pattes de guidage (32) qui sont réalisées de manière à être fixées sur une bague extérieure (34) d'un palier de pied du moyeu de rotor (39) et qui font saillie vers l'extérieur du moyeu de pale (30) de manière à s'engager sur une surface extérieure de la pale de rotor (39) avant le contact d'une autre pièce quelconque de la pale de rotor avec le moyeu de rotor pour guider le pied de pale vers la bride de moyeu pendant l'installation de la pale de rotor (39) sur le moyeu de rotor (30).

2. Système de guidage selon la revendication 1, dans lequel la pointe de guidage (10) présente une forme conique qui s'évase vers l'extrémité libre (14) du boulon (6, 8) lorsque la pointe de guidage (10) est agencée sur le boulon (6, 8).

3. Système de guidage selon la revendication 1 ou 2, dans lequel la pointe de guidage (10) est réalisée de sorte à être ajustée de manière serrée dans une cavité du boulon (6, 8) faisant saillie sensiblement dans un sens d'une extension en longueur du boulon (6, 8).

4. Système de guidage selon la revendication 3, dans lequel le boulon (6, 8) présente un manchon hexagonal agencé dans la cavité et la pointe de guidage (10) présente une vis à tête hexagonale adaptée qui est vissée dans une tige qui s'étend depuis une tête de pointe de guidage, un joint torique élastique (24) étant agencé entre une tête de vis et un bord de la tige faisant face à la tête hexagonale de la vis (22), et la pointe de guidage (10) étant réalisée de manière à être agencée dans la cavité du boulon (6, 8) en insérant la tête de vis hexagonale dans le manchon hexagonal à l'intérieur de la cavité et en vissant la vis dans la tige de manière à presser le joint torique (24) et à établir un raccordement à ajustage serré entre une paroi intérieure de la cavité et le joint torique pressé.

5. Système de guidage selon l'une des revendications précédentes, comprenant en outre un boulon de guidage (8) pour le remplacement de l'un des boulons (6) dans la bride de pale (4), le boulon de guidage (8) portant la pointe de guidage (10) et présentant un élément d'écartement (12) entourant le boulon de guidage (8) dans un tronçon entre son extrémité libre (14) et la bride de moyeu (4), l'élément d'écartement (12) agrandissant un diamètre du boulon de guidage (8).

6. Système de guidage selon l'une des revendications précédentes, comprenant en outre un dispositif (42) pour espacer la bride de moyeu (28) du moyeu de rotor (30) de la bride de pale (4) de la pale de rotor pendant l'installation de la pale de rotor sur le moyeu de rotor, le dispositif d'espacement (42) définissant un espacement entre la bride de moyeu (28) et la bride de pale (4).

7. Procédé de montage d'une pale de rotor sur un moyeu de rotor d'une génératrice pour éolienne, le procédé comprenant les étapes dans lesquelles :
a) une pointe de guidage (10) est fixée de manière non-permanente sur une extrémité libre (14) d'au moins un boulon (6, 8) qui est présent dans une bride de pale (4) de la pale de rotor (39) et qui s'étend vers l'extérieur de la pale de rotor (39), une dimension de la pointe de guidage (10) qui est considérée dans un sens sensiblement perpendiculaire à un sens d'une extension en longueur du boulon et dans un état dans lequel la pointe de guidage est agencée sur la tête du boulon, étant supérieure à un diamètre d'un filet de vis (16) du boulon (6, 8), le procédé étant **caractérisé par**
b) le montage d'une patte de guidage (32) sur une bague extérieure (34) d'un palier de pied du moyeu de rotor, la patte de guidage (32) faisant saillie vers l'extérieur du moyeu de rotor,
c) le montage de la pale de rotor (39) sur le moyeu de rotor (30), une surface extérieure de la pale de rotor (39) engageant la patte de guidage (32) lorsque le pied de pale est guidé vers la bride de moyeu (28), et la pointe de guidage (10) s'engageant et faisant saillie dans un trou de passage dans la bride de moyeu (28) lorsque la pale de rotor (39) s'approche du moyeu de rotor (30), et
d) le montage d'écrous sur les boulons (6, 8) qui sont présents dans la bride de pale de la pale de rotor.

8. Procédé selon la revendication 7, comprenant l'étape dans laquelle la commande de pas d'une pale de rotor est utilisée pour ajuster la pointe de guidage (10) par rapport au trou de passage dans la bride de moyeu (28) lorsque le pied de pale est guidé vers la bride de moyeu.

9. Procédé selon la revendication 7 ou 8, comprenant en outre les étapes
a) de montage d'un dispositif d'espacement (42) sur la bride de moyeu (28) du moyen de rotor (30) avant l'agencement des écrous sur les boulons (6, 8),
b) de retrait du dispositif d'espacement (42) avant le serrage des écrous sur les boulons (6, 8).
